# EUROPÄISCHE PATENTSCHRIFT

(11) **EP 2 864 871 B1**
(45) Veröffentlichungstag und Bekanntmachung des Hinweises auf die Patenterteilung: **13.04.2016**
(21) Anmeldenummer: 13730810.2
(22) Anmeldetag: 19.06.2013
(51) Int. Cl.: G06F 9/445, G06F 21/57, G06F 21/44, H04L 29/06, G06K 19/07

(54) **VERFAHREN UND VORRICHTUNG ZUM AUSTAUSCH DES BETRIEBSSYSTEMS EINES RESSOURCENBESCHRÄNKTEN TRAGBAREN DATENTRÄGERS**
METHOD AND DEVICE FOR EXCHANGING THE OPERATING SYSTEM OF A RESOURCE-LIMITED PORTABLE DATA CARRIER
PROCÉDÉ ET DISPOSITIF POUR ÉCHANGER LE SYSTÈME D'EXPLOITATION D'UN SUPPORT DE DONNÉES PORTABLE DOTÉ DE RESSOURCES LIMITÉES

(30) Priorität: 22.06.2012 DE 102012012509
(43) Veröffentlichungstag der Anmeldung: 29.04.2015
(73) Patentinhaber: Giesecke & Devrient GmbH, 81677 München (DE)
(72) Erfinder: SCHMALZ, Frank, 81371 München (DE)
(86) Internationale Anmeldenummer: PCT/EP2013/001814
(87) Internationale Veröffentlichungsnummer: WO 2013/189600

(56) Entgegenhaltungen:
- EP-A2- 2 388 151
- US-A1- 2004 187 035
- US-A1- 2006 230 165
- US-A1- 2009 026 275
- Bundesamt für Sicherheit in der Informationstechnik: "BSI TR-03110 Advanced Security Mechanisms for Machine Readable Travel Documents", , 20. März 2012 (2012-03-20), XP055029789, Gefunden im Internet: URL:https://www.bsi.bund.de/ContentBSI/Pub likationen/TechnischeRichtlinien/tr03110/i ndex_htm.html [gefunden am 2012-06-13] in der Anmeldung erwähnt

## Beschreibung

Die Erfindung betrifft den Austausch des Betriebssystems in einem ressourcenbeschränkten tragbaren Datenträger, der keine oder allenfalls über eine eingeschränkte Nutzerschnittstelle verfügt. Vor allem betrifft die Erfindung den Austausch des Betriebssystems in chipkartenartigen Datenträgern oder in Datenträgern mit anderen Formfaktoren, deren Hauptbestandteil ein Smartcard-Chip ist. Insbesondere betrifft die Erfindung den Austausch des Betriebssystems eines maschinenlesbaren elektronischen Ausweisdokuments.

Zunehmend erfolgt die Kontrolle personenbezogener Daten mit Hilfe von maschinenlesbaren elektronischen Ausweisen, die typischerweise eine Datenseite nach Chipkartenart enthalten oder die vollständig als Chipkarte oder Ausweiskarte in einem ähnlichen Format ausgeführt sind. Zugriff und Umgang mit personenbezogenen Daten unterliegen besonderen Sicherheitsanforderungen. Vor allem muss sichergestellt sein, dass der Zugriff nicht durch Unberechtigte erfolgt und dass personenbezogene Daten nicht unzulässig verändert werden. Mechanismen zur Absicherung der personenbezogenen Daten sind z.B. in der vom Bundesamt für Sicherheit in der Informationstechnik (BSI) herausgegebenen technischen Richtlinie TR-03110 "Advanced Security Mechanisms for Machine Readable Travel Documents", Version 2.10 (im Internet erhältlich unter: https://www.bsi.bund.de/DE/Publikationen/TechnischeRichtlinien/ tr0311 0/index_htm.html) niedergelegt. Beschrieben sind in dieser Richtlinie u.a. das Protokoll "Extended Access Control" (EAC) sowie das Protokoll "Pass-word Authenticated Connection Establishment" (PACE). PACE ist dabei ein zwischen einem Chip eines maschinenlesbaren Ausweisdokumentes und einem Terminal ausgeführter wechselseitiger Authentisierungsmechanismus, der auf einem gemeinsamen Passwort beruht. EAC ist ein zwischen einem Chip eines maschinenlesbaren Ausweises und einem Terminal ausgeführtes Protokoll zur wechselseitigen Authentisierung, das zwei Unterprotokolle umfasst, nämlich die Terminalauthentisierung (TA - Terminal Authentication) und die Chipauthentisierung (CA - Chip Authentication). Im Rahmen der Terminalauthentisierung weist ein Terminal dem Chip die Berechtigung zum Zugriff auf in dem Chip gespeicherte personenbezogene Daten mit Hilfe einer Folge von Zertifikaten nach. In der Chipauthentisierung prüft das Terminal die Echtheit des Chips und es wird ein geheimer symmetrischer Schlüssel ausgehandelt, mit dem der nachfolgende weitere Datenaustausch verschlüsselt wird.

Die in der TR-03110 beschriebenen Mechanismen stellen wirkungsvoll sicher, dass nur berechtigte Terminals auf einen Chip eines maschinell auslesbaren elektronischen Ausweises zugreifen können und dass ggf. ausgelesene personenbezogene Daten von einem echten Chip stammen. Das Auslesen von personenbezogenen Daten aus dem Chip eines elektronischen Ausweises wird durch die TR-03110 damit hinreichend sichergestellt.

Auf das Einbringen von Daten in einen maschinell auslesbaren elektronischen Ausweis, insbesondere auf das Einbringen von Daten der Betriebssoftware des Chips eines elektronischen Ausweises geht die TR-03110 dagegen nicht ein. Bislang spielte das Einbringen von Daten der Betriebssoftware des Chips eines elektronischen Ausweises auch keine Rolle, weil das Betriebssystem gängiger Smartcard-Chips typischerweise in einem ROM-Speicher abgelegt und Änderungen nur mit erheblichem Aufwand möglich waren. Zudem beträgt die durchschnittliche Lebensdauer gängiger elektronischer Ausweise nur wenige Jahre, typisch ein bis drei Jahre, so dass ggf. erforderliche Änderungen am Betriebssystem einfach durch Herausgabe einer neuen Kartengeneration vorgenommen werden konnten.

Für jetzt aufkommende elektronische Ausweise werden jedoch längere Lebensdauern von z.B. 10 Jahren verlangt. Sollte im Rahmen einer solchen Lebensdauer eine Änderung des Betriebssystems notwendig werden, könnte die bisherige Praxis, solche Änderungen mit der nächsten Kartengeneration vorzunehmen, zu erheblichen Nachteilen führen. So könnte der Fall eintreten, dass eine wichtige von einem Ausweis bereitgestellte Funktion nicht ausführbar ist oder es kann erforderlich werden, Ausweise vorzeitig auszutauschen, was mit entsprechend hohen Kosten verbunden ist.

Weiterhin ist aus der US 2009/0026275 A1 eine automatisch konfigurierbare Smartcard bekannt, bei welcher generische Daten erkannt werden und beim erstmaligen Booten der Smartcard migriert werden.

Die EP 2 388 151 A2 offenbart einen Herstellungsprozess für einen elektronischen Pass (E-Pass). Der Pass weist neben einem Betriebssystem auch eine logische Datenstruktur (LDS) auf. Diese Datenstruktur kann ohne das Betriebssystem zu verändern aktualisiert werden.

Aus der US 2006/0230165 A1 geht eine Vorrichtung zum Provisionieren einer Netzwerkinfrastruktur hervor. Die Einrichtung umfasst einen BootLoader, mit dem eine Provisionierungsinformation von einer Provisionierungsschnittstelle angefragt werden kann, und ein Zertifikat, das der Provisionierungsschnittstelle zugeordnet ist, um die Provisionierungsschnitte zu authentifizieren.

Es ist deshalb Aufgabe der Erfindung ein Verfahren anzugeben, das es gestattet, das Betriebssystem eines Chips eines maschinell auslesbaren elektronischen Ausweises im Feld sicher auszutauschen.

Diese Aufgabe wird gelöst durch ein Verfahren mit den Merkmalen des Hauptanspruchs. Die Aufgabe wird ebenfalls gelöst durch einen Gegenstand mit den Merkmalen des unabhängigen Vorrichtungsanspruchs.

Das erfindungsgemäße Verfahren hat den Vorteil, dass das Betriebssystem eines Chips eines elektronischen Ausweises im Feld ausgetauscht werden kann, ohne dass der Aufbau des elektronischen Ausweises verändert werden muss. Bei einem Austausch können in vorteilhafter Weise gespeicherte personenbezogene Daten erhalten bleiben und müssen nicht erneut bereitgestellt werden. Das erfindungsgemäße Verfahren hat weiter den Vorteil, dass, wenn die in der TR-03110 beschriebenen Mechanismen genutzt werden, daran nur geringfügige Änderungen notwendig sind. Die Erfindung macht sich dabei zu Nutze, dass das Betriebssystem in neueren Smartcard-Chips ganz oder zu wesentlichen Teilen in einem nichtflüchtigen überschreibbaren Speicher, insbesondere einem Flash-Speicher, abgelegt werden kann.

Durch die Einführung eines neuen Terminalzertifikats wird in Verbindung mit der Verwendung eines Ladeschlüssels sichergestellt, dass nur vom Herausgeber eines elektronischen Ausweises bereitgestellte Originalsoftware auf einen Ausweis gelangt.

Das erfindungsgemäße Verfahren gestattet in vorteilhafter Weise dem Herausgeber eines elektronischen Ausweises jederzeit die Kontrolle darüber, zu welchem Zeitpunkt eine bestimmte Version einer Betriebssoftware auf einem elektronischen Ausweis Software installiert wird.

Vorteilhafte Weiterbildungen und zweckmäßige Ausgestaltungen der Erfindung ergeben sich aus den Merkmalen der abhängigen Ansprüche.

Unter Bezugnahme auf die Zeichnung wird nachfolgend ein Ausführungsbeispiel der Erfindung näher erläutert.

Es zeigen:
- Fig. 1: die Belegung der Speicheranordnung eines tragbaren Datenträgers beim Austausch von Betriebssoftware zu verschiedenen Zeitpunkten,
- Fig. 2: ein Flussdiagramm des Austauschs des Betriebssystems eines tragbaren Datenträgers, und
- Fig. 3: den Aufbau eines tragbaren Datenträgers und eines Terminals.

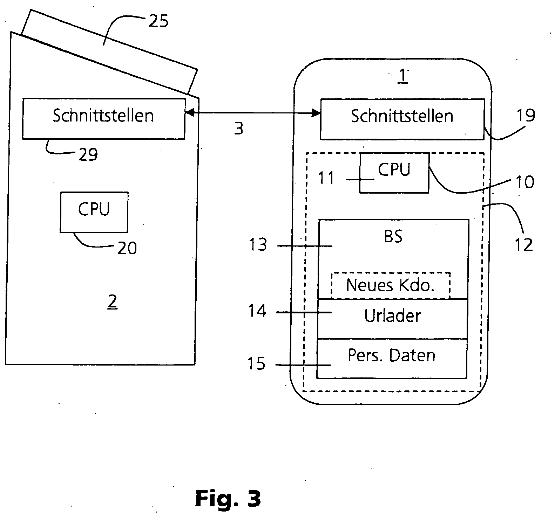

Die für die folgende Beschreibung zugrundegelegte Anordnung ist in vereinfachter Form in Fig. 3 dargestellt. Sie umfasst einen ressourcenbeschränkten tragbaren Datenträger 1, der über eine Datenverbindung 3 mit einem Terminal 2 kommuniziert. Der ressourcenbeschränkte tragbare Datenträger 1 stellt im Standardbetrieb mindestens eine nutzerbezogene Funktion bereit, in deren Rahmen auf personenbezogene Daten zugegriffen wird, die auf dem Datenträger 1 gespeichert sind. Beispielsweise gibt der Datenträger auf Anfrage eines Terminals 2 über die Datenverbindung 3 die Adresse eines Nutzers an das Terminal 2 aus oder erstellt eine Signatur über einen von dem Terminal 2 vorgelegten Datensatz.

Häufig hat der ressourcenbeschränkte tragbare Datenträger 1 kartenförmige Gestalt und ist z.B. im Format einer Chipkarte oder als Datenseite für ein Passbuch ausgeführt. Andere Formfaktoren sind aber ebenso möglich: beispielsweise kann der ressourcenbeschränkte tragbare Datenträger 1 im Format einer SIM-Karte vorliegen oder in der Form eines Bekleidungsgegenstandes, etwa einer Uhr, ausgeführt sein.

Nachfolgend wird, ohne daß damit andere Ausführungsformen ausgeschlossen sein sollen, davon ausgegangen, dass der ressourcenbeschränkten tragbaren Datenträger 1 als maschinenlesbarer elektronischer Ausweis ausgeführt ist. Diese Ausführung bildet eine bevorzugte Anwendungsmöglichkeit.

Wesentlicher Bestandteil des elektronischen Ausweises 1 ist ein Mikrocontroller 10, der eine zentrale Prozessoreinheit 11 sowie eine nichtflüchtige Speicheranordnung 12 aufweist.

Der Mikrocontroller 10 ist typischerweise in Form einer monolithischen Schaltung ausgeführt, die durch ihre geringen Abmessungen sowie durch weitere Maßnahmen gegen Manipulationen besonders geschützt ist. Der Mikrocontroller 10 bietet grundsätzlich dieselbe Funktionalität wie ein Standard-Mikrocontroller für PCs und besitzt denselben Grundaufbau mit den typischen Grundkomponenten. Bedingt durch seine geringe Baugröße - die Grundfläche liegt typischerweise unter 10 mm² - ist seine Leistungsfähigkeit aber beschränkt. Aufbau und Ausführung geeigneter Mikrocontroller 10 für ressourcenbeschränkte tragbare Datenträger 1 sind an sich bekannt und beispielsweise im Handbuch der Chipkarten, W. Rankl, W. Effing, 5. Auflage, Hansa-Verlag München, beschrieben; auf diese Ausführungen wird hier grundsätzlich ausdrücklich verwiesen. Entsprechend seiner typischen Bauform wird der Mikrocontroller 10 nachfolgend als Chip bezeichnet.

In der Speicheranordnung 12 ist die Betriebssoftware des elektronischen Ausweises 1 gespeichert. Sie gliedert sich in drei Bereiche, nämlich das Betriebssystem 13, einen Urlader 14 - häufig auch als Bootloader bezeichnet - sowie einen Bereich 15 mit personenbezogene Daten eines Nutzers, der zudem Anwendungsdaten zur Ausführung einer von dem Ausweis 1 bereitgestellten Funktion enthalten kann.

Die Speicheranordnung 12 ist vom nichtflüchtigen Typ. Zweckmäßig ist sie vollständig in Form eines Flash-Speichers ausgeführt; alternativ kann vorgesehen sein, einen Teil der Speicheranordnung 12 als Speicher vom ROM-Typ auszuführen und einen Teil der Daten, insbesondere Daten des Betriebssystems 13 und/ oder des Urladers 14, in einem als ROM ausgeführten Speicherteil abzulegen.

Das Betriebssystem 13 kontrolliert im Standardbetrieb die Funktion des Datenträgers 1. Es ist dazu eingerichtet, Protokolle zur Absicherung der personenbezogenen Daten auszuführen. Insbesondere ist es dazu eingerichtet, die in der Richtlinie TR-03110 beschriebenen Protokolle auszuführen. Der dabei verwendete Kommandosatz ist dabei allerdings um ein zusätzliches bzw. neues Kommando erweitert. Dieses zusätzliche Kommando erlaubt es einem Terminal 2, einen Ladeschlüssel an das Betriebssystem 13 zu übertragen.

Der Urlader 14 ist dazu eingerichtet, gegebenenfalls ein neues Betriebssystem 131 auf den elektronischen Ausweis 1 zu übertragen. In einer bevorzugten Ausgestaltung ist der Urlader 14 dazu eingerichtet, eine sichere Ende-zu-Ende-Verbindung zu einem Terminal 2 zu betreiben. Alternativ kann der der Urlader 14 dazu eingerichtet sein verschlüsselte Betriebssystemabbilder ohne sichere Ende-zu-Ende-Verbindung entgegenzunehmen.

Der elektronische Ausweis 1 besitzt weiter eine Schnittstelle 19, über die ein Datenaustausch mit einem Terminal 2 möglich ist. Die Schnittstelle 19 ist vorzugsweise als Kontaktlosschnittstelle ausgebildet, kann aber auch als kontaktbehaftete Schnittstelle ausgeführt sein. Auch können sowohl eine kontaktlos arbeitende wie eine kontaktbehaftet arbeitende Schnittstelle 19 vorgesehen sein.

Häufig besitzt der elektronische Ausweis 1 keine eigene Nutzerschnittstelle zur Ausgabe von Daten an einen Nutzer oder zur Entgegennahme von durch einen Nutzer eingegebenen Daten. Bisweilen können gleichwohl eine reduzierte Ausgabeschnittstelle, z.B. in Gestalt einiger Leuchtdioden oder eines einfachen, z.B. einzeiligen Displays, oder einfache Eingabemittel, z.B. in Gestalt einzelner Tasten oder eines Sensors, etwa eines Fingerabdrucksensors, vorgesehen sein.

Das Terminal 2 fungiert gegenüber dem elektronischen Ausweis 1 als Lesegerät. Es besitzt eine zentrale Prozessoreinheit 20 sowie eine zu der Schnittstelle 19 des elektronischen Ausweises 1 korrespondierende Schnittstelle 29. Typischerweise besitzt das Terminal 2 ferner eine Nutzerschnittstelle 25, über die Ausgaben an einen Nutzer bzw. Eingaben durch einen Nutzer an das Terminal 2 möglich sind. Das Terminal 2 ist zur Ausführung der in der TR-03110 spezifizierten Protokolle zur Absicherung personenbezogener Daten eingerichtet.

Das Terminal 2 kann die Gestalt eines feststehenden Gerätes, etwa nach Art eines Geldausgabeautomaten, haben oder in Form eines transportablen Gerätes ausgeführt sein, etwa nach Art eines tragbaren Kreditkartenterminals. Das Terminal 2 kann auch ein PC oder ein vergleichbarer Computer sein, der z.B. über das Internet mit dem elektronischen Ausweis 1 verbunden ist.

Über die Datenverbindung 3 werden Protokolle durchgeführt, mit denen von dem elektronischen Ausweis 1 bereitgestellte Funktionen ausgeführt werden. Zweckmäßig können über die Datenverbindung 3 ferner die in der TR-03110 beschriebenen Protokolle ausgeführt werden. Insbesondere können zweckmäßig die Protokolle PACE und EAC durchgeführt werden. Alternativ oder zusätzlich können andere Protokolle zur Absicherung der personenbezogenen Daten 15 durchgeführt werden.

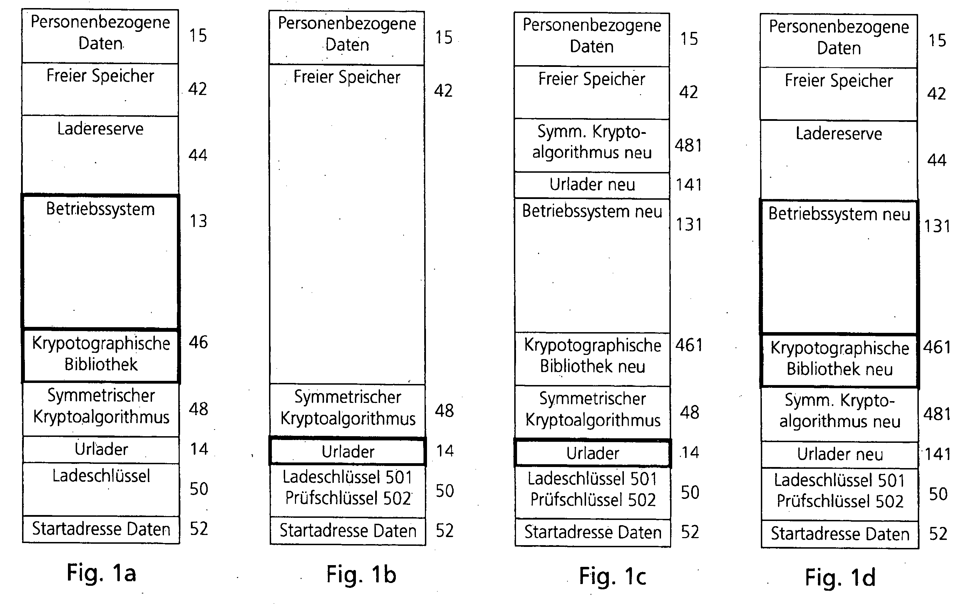

Fig. 1A zeigt eine Belegung der Speicheranordnung 12 in einer größeren Detaillierung. Die Belegung mit Dateninhalten erfolgt in dem Beispiel so, dass sich der zur Verfügung stehend Speicherbereich in neun Blöcke gliedert, nämlich: einen Datenblock 15 für personenbezogene Daten und Anwendungsdaten, einen freien Speicherbereich 42 zur freien Belegung, einen speziell zur Aufnahme von Ergänzungen der Betriebssoftware reservierte Ladereserve-Bereich 44, das Betriebssystem 13, eine kryptographische Bibliothek 46 zur Bereitstellung von Verschlüsselungsmechanismen, die das Betriebssystem 13 bei der Durchführung der Ausweisfunktionen einsetzt, einen Block 48, in dem ein auch für den Urlader 14 zugänglicher symmetrischer Kryptoalgorithmus für das Nachladen von Betriebssoftware abgespeichert ist, den Urlader 14, einen Block 50 zur Aufnahme von Ladeschlüsseln 501 und- und Prüfschlüsseln 502 für das Nachladen von Betriebssoftware, sowie einen Block 52 zur Aufnahme einer Startadresse der im Block 15 abgelegten personenbezogenen Daten.

Der von den verschiedenen Dateninhalten belegte Speicherplatz in der Speicheranordnung 12 ist, wie in Fig.1A angedeutet, unterschiedlich groß; die gezeigten Verhältnisse sind dabei nur beispielhaft und sollen in keiner Weise ein verbindliche reale Aufteilung vorgeben. Typischerweise belegt aber das Betriebssystem 13 einen relativ großen Anteil des insgesamt zu Verfügung stehenden Speicherbereichs und ist der zur Verfügung stehende Speicherplatz für den freien Speicherbereich 42 sowie die Ladereserve 44 demgegenüber relativ klein. Durch die Einfassung mit einer dicken Linie ist veranschaulicht, dass im Standardbetrieb das Betriebssystem 13 unter Verwendung der kryptographischen Bibliothek 46 die Funktion des elektronischen Ausweises 1 kontrolliert.

Das Betriebssystem 13, der Urlader 14 und die kryptographische Bibliothek 46 sind üblicherweise bei Ausgabe des elektronischen Ausweises 1 an einen Nutzer bereits installiert; im Block 50 liegt zweckmäßig zudem bereits bei Ausgabe ein Ladeschlüssel. Die Erstinstallation dieser Betriebssoftware erfolgt in der Regel durch einen Software- oder einen Ausweishersteller, nicht durch den Herausgeber.

Die erstinstallierte Betriebssoftware kann im günstigen Fall über die gesamte Lebensdauer des elektronischen Ausweises unverändert bleiben. Aufgrund von technischen Entwicklungen oder Änderungen gegebener Randbedingungen, etwa der Einführung neuer Sicherheitsstandards, kann es aber vor allem bei langen Lebensdauern von z.B. 5 Jahren und mehr vorkommen, dass eine Anpassung von Betriebssoftware erforderlich ist. In einem solchen Fall gestattet der vorbeschriebene elektronische Ausweis 1 den Austausch von Betriebssoftware.

Zu diesem Zweck wird das zur Terminalauthentisierung verwendete Zertifikat erweitert und ein modifiziertes Terminalzertifikat definiert, das dem elektronischen Ausweis 1 die Berechtigung eines Terminals 2 nachweist, ein neues Betriebssystem laden zu können. Das modifizierte Terminalzertifikat enthält zusätzlich zu den üblichen Feldern einen Prüfschlüssel zur Prüfung der Authentizität eines neu zu ladenden Betriebssystems.

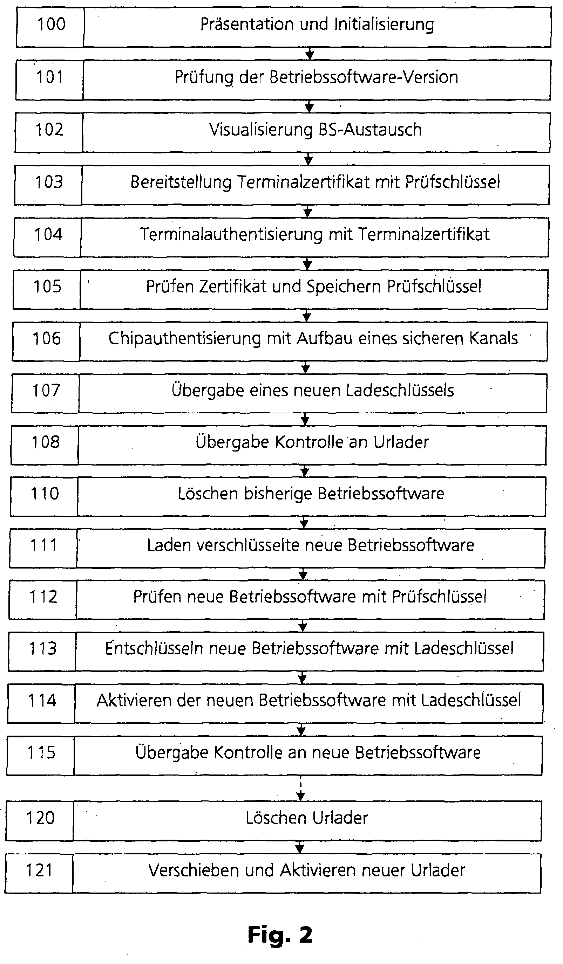

Fig. 2 veranschaulicht als Flussdiagramm den Ablauf des Austauschs des Betriebssystems sowie weiterer Komponenten der Betriebssoftware eines elektronischen Ausweises 1. In den Fig. 1B, 1C, 1D sind bei der der Durchführung von Betriebssoftware zu unterschiedlichen Zeitpunkten entstehende Belegungen der Speicheranordnung 12 dargestellt.

Für den folgenden Ablauf wird davon ausgegangen, dass das Betriebssystem 13 des präsentierten elektronischen Ausweises 1 gewechselt werden soll. Ein neu zu ladendes Betriebssystem 131 steht hierzu in dem Terminal 2 bereit, typischerweise als sogenanntes COS(Card Operating System)-Abbild, d.h. als noch nicht aktivierter Code des zu ladenden Betriebssystems 131. Typischerweise wird das zu ladende Betriebssystem 131 von einem vertrauenswürdigen Hintergrundsystem des Herausgebers des elektronischen Ausweises 1 bereitgestellt. Das Abbild des neuen Betriebssystems 131 selbst wird dem Herausgeber des elektronischen Ausweises 1 in der Regel von einem externen Zulieferer, z.B. einem Software-Hersteller, zur Verfügung gestellt.

Zusammen mit dem Betriebssystem-Abbild 131 wird in der Regel auch ein neuer Ladeschlüssel 501 zur Verfügung gestellt. Typischerweise werden das Betriebssystem-Abbild 131 und der neue Ladeschlüssel bereits in verschlüsselter Form bereitgestellt: das Betriebssystem-Abbild 131 ist dabei mit dem neuen Ladeschlüssel 501, der neue Ladeschlüssel 501mit dem letzten vorhergehenden Ladeschlüssel verschlüsselt. Zweckmäßig wird weiter ein Kryptogramm bereitgestellt, das den neuen Ladeschlüssel 501 in allen mit den vorhergehenden Ladeschlüsseln möglichen Verschlüsselungen enthält. Da in der Regel zusammen mit Betriebssystem 13 stets auch die kryptographische Bibliothek 46 ausgetauscht wird, wird diese für die Beschreibung des Ablaufs grundsätzlich als Teil des zu ladenden Betriebssystems 131 angesehen und nicht mehr durchgehend separat erwähnt.

Bei dem Austausch von Betriebssoftware wird der elektronische Ausweis 1 nicht im Standardbetrieb betrieben, um eine nutzerbezogenen Funktion auszuführen, sondern in einem Aktualisierungsmodus, in dem nutzerbezogene Funktionen zumindest zunächst nicht ausgeführt werden.

Das Verfahren setzt ein, Schritt 100, indem der elektronische Ausweis 1 an einem geeigneten Terminal 2 präsentiert und initialisiert wird. In einem ersten Schritt erfolgt zweckmäßig eine paßwortgestützte Authentisierung zum Nachweis der Berechtigung eines Nutzers. Die Ausführung kann zweckmäßig unter Verwendung des PACE-Protokolls gemäß der TR-03110 erfolgen. Gemäß diesem Protokoll wird zugleich eine sichere Secure Messaging-Verbindung zwischen dem Terminal 2 und dem elektronischem Ausweis 1 aufgebaut.

Anschließend folgt ein Schritt, in dem festgestellt wird, daß ein Austausch des Betriebssystems 13 erforderlich ist- Der Schritt kann z.B. durch Prüfen der aktuellen Betriebssoftware-Version bzw. der aktuellen Betriebssystemversion durch das Terminal 2 festgestellt werden, Schritt 101.

Wurde die Notwendigkeit eins Betriebssystemaustauschs erkannt, geht das Terminal 2 in den Aktualisierungsmodus. Zweckmäßig wird dieser besondere Betriebszustand dem Nutzer über die Nutzerschnittstelle 25 des Terminals 2 visualisiert, z.B. durch eine entsprechende Anzeige "Austausch des Betriebssystems", Schritt 102.

Das Terminal 2 fordert darauf von einem vertrauenswürdigen Hintergrundsystem des Herausgebers des elektronischen Ausweises 1 ein Terminalzertifikat an. Das vertrauenswürdige Hintergrundsystem bildet darauf ein modifiziertes Terminalzertifikat, indem es in ein übliches Terminalzertifikat, wie es etwa gemäß der TR-03110 vorgesehen ist, einen Prüfschlüssel 502 einfügt. Der Prüfschlüssel 502 wird zweckmäßig gebildet, indem in an sich bekannter Weise ein Hash- oder ein MAC (Message Authentication Code)-Wert über den Code des neu zu ladenden Betriebssystems gebildet wird. Der Prüfschlüssel geht in die Signatur des Terminalzertifikats ein und ist so vor Manipulation gesichert. Erfolgt die Terminalauthentisierung, wie nach der TR-03110 vorgesehen, mittels einer Kette von Zertifikaten, geschieht die Modifikation zweckmäßig, indem in das jeweils als letztes geprüfte Zertifikat der Kette der Prüfschlüssel als zusätzliche Information eingefügt wird. Das so gebildete modifizierte Terminalzertifikat stellt das vertrauenswürdige Hintergrundsystem dem Terminal 2 bereit, Schritt 103.

Unter Verwenddung des durch Einfügen des Prüfschlüssels 502 modifizierten Terminalzertifikats wird eine Terminalauthentisierung durchgeführt, Schritt 104. Darin weist das Terminal 2 dem Chip 10 des elektronischen Ausweises 1 die Berechtigung zum Zugriff und zur Veränderung der in der Speicheranordnung 12 gespeicherten Daten nach. Zweckmäßig wird eine Terminalauthentisierung der Version 2 gemäß der TR-03110 durchgeführt. Im Rahmen der Terminalauthentisierung sendet das Terminal 2 dem elektronischen Ausweis 1 typischerweise eine Kette von Zertifikaten, die von dem Betriebssystem 13 des elektronischen Ausweises 1 geprüft wird. Das letzte Zertifikat der Kette ist dabei zweckmäßig das modifizierte Terminalzertifikat. Mit dem im letzten Zertifikat der Kette enthaltenen öffentlichen Schlüssel führt der Chip 10 auch zweckmäßig die eigentliche Terminalauthentisierung durch, z.B. durch einen Challenge-Response-Datenaustausch. Im Falle einer positiven Authentisierung speichert das Betriebssystem 13 den in dem Terminalzertifikat enthaltenen Prüfschlüssel 502 im Block 50 der Speicheranordnung 12, Schritt 105.

Im folgenden Schritt 106, wird eine Chipauthentisierung durchgeführt; zweckmäßig geschieht dies in Form einer Chip-Authentisierung Version 2 gemäß der TR-03110. Im Rahmen der Chipauthentisierung wird durch Anwendung eines Diffie-Hellman-Algorithmus ein sicherer Kanal zum Terminal 2 ausgehandelt.

Anschließend wird mit einem Kommando des Terminals 2 ein neuer Ladeschlüssel 501 an das Betriebssystem 13 übergeben, Schritt 107. Der neue Ladeschlüssel 501 ist vorzugsweise mit dem vorhergehenden Ladeschlüssel der letzen Aktualisierung bzw. mit dem bei Ausgabe des elektronischen Ausweises 1 gespeicherten Ladeschlüssel verschlüsselt. Um eine Entschlüsselung des neuen Ladeschlüssels auch dann zu ermöglichen, wenn dieser nicht der unmittelbar nächste zum letzten gespeicherten vorhergehenden ist, wird dem Betriebssystem 13 zusammen mit dem neuen Ladeschlüssel 501 zweckmäßig ein Kryptogramm mit allen möglichen Verschlüsselungen mit vorhergehenden Ladeschlüsseln übergeben. Sofern der neue Ladeschlüssel 501 verschlüsselt ist, entschlüsselt ihn das Betriebssystem 13 mit dem vorhergehenden Ladeschlüssel bzw. mit einem geeigneten Ladeschlüssel, den es aus dem Kryptogramm entnimmt. Den entschlüsselten neuen Ladeschlüssel 501 speichert das Betriebssystem 13 ebenfalls im Block 50 der Speicheranordnung 12.

Sodann übergibt das Betriebssystem 13 die Kontrolle an den Urlader 14, Schritt 108.

Nach Übernahme der Kontrolle löscht der Urlader 14 das bisherige Betriebssystem 13, Schritt 110.

Fig. 1B veranschaulicht den nach Durchführung des Schrittes 110 vorliegenden Zustand in der Speicheranordnung 12. Die Kontrolle der Funktion des elektronischen Ausweises 1 liegt zu diesem Zeitpunkt beim Urlader 14. Durch Löschen des bisherigen Betriebssystems 13 ist unter Einbeziehung der Ladereserve 44 der freie Speicherbereich 42 gegenüber der Ausgangssituation gemäß Fig. 1A deutlich vergrößert.

Sodann lädt der Urlader 14 das auf dem Terminal 2 bereitgestellte Abbild des neuen Betriebssystems 131 in den durch Löschen des bisherigen Betriebssystems frei gewordenen Speicherbereich in der Speicheranordnung 12, Schritt 111.

Fig.1C zeigt die Belegung der Speicheranordnung 12 nach Ausführung des Schrittes 111. Die Kontrolle über die Funktion des elektronischen Ausweises 1 liegt zu diesem Zeitpunkt unverändert beim Urlader 14. In den freien Speicher 42 sind nun jedoch ein neues Betriebssystem 131 und eine neue kryptographische Bibliothek 461 geladen. Desweiteren sind ein neuer Urlader 141 sowie ein neuer symmetrischer Kryptoalgorithmus 481 geladen - das Nachladen dieser Komponenten wird später noch erläutert. Die neu geladenen Komponenten 131,141,461 und 481 sind aber noch nicht aktiviert und noch mit dem neuen Ladeschlüssel verschlüsselt.

Ist das gesamte Abbild des neuen Betriebssystems 131 übertragen, prüft der Urlader 14 das Abbild des neuen Betriebssystems 131 mit Hilfe des Prüfschlüssels, Schritt 112.

Ist diese Prüfung erfolgreich, entschlüsselt der Urlader 14 das Abbild des neuen Betriebssystems 131 mit dem neuen Ladeschlüssel 501, Schritt 113. Durch geeignete Maßnahmen wie z.B. Prüfsummen oder Padding wird die Integrität des Betriebssystem-Abbildes und des entschlüsselten neuen Betriebssystems 131 sichergestellt.

Anschließend aktiviert der Urlader 14 das neue Betriebssystem 131 und übergibt die Kontrolle an das neue Betriebssystem, Schritt 114.

In ergänzenden Schritten kann auf analoge Weise der Urlader 14 durch einen neuen Urlader 141 ersetzt werden. Diese Schritte sind aber optional und können entsprechend entfallen. Soll ein neuer Urlader 141 installiert werden, wird der neue Urlader 141 zweckmäßig zusammen mit dem neuen Betriebssystem 131 in Schritt 112 übertragen und in dem durch Löschen des bisherigen Betriebssystems 13 frei gewordenen Bereich des freien Speichers 42 abgelegt. Nach Aktivierung des neuen Betriebssystems 131 löscht dieses den bisherigen Urlader 14, Schritt 120. Anschließend schreibt das neue Betriebssystem 131 in einem internen Umspeichervorgang den neuen Urlader 141 an die Stelle des gelöschten bisherigen Urladers 14 und aktiviert den neuen Urlader, Schritt 121.

Auf dieselbe Weise wie vorstehend anhand des neuen Betriebssystems und des neuen Urladers beschrieben und in Fig. 1 dargestellt kann desweiteren auch ein Austausch des symmetrischen Kryptoalgorithmus 48 erfolgen. Zweckmäßig wird der neue symmetrische Kryptoalgorithmus 48 zusammen mit dem Betriebssystem 13 ausgetauscht. D.h. der neue symmetrische Kryptoalgorithmus 481 wird zunächst zusammen mit dem neuen Betriebssystem 131 und ggf. dem neuen Urlader 141 in den durch Löschen des bisherigen Betriebssystems 13 frei gewordenen Bereich des Speichers 42 geschrieben.

Nach der Aktivierung des neuen Betriebssystems 131 verschiebt dieses speicherintern den neuen symmetrischen Kryptoalgorithmus 481 an die Stelle des bisherigen symmetrischen Kryptoalgorithmus 48 und aktiviert schließlich den neuen symmetrischen Kryptoalgorithmus 481. Zweckmäßig geschieht dies zusammen mit dem Verschieben und Aktivieren des neuen Urladers 141.

Nach Aktivieren des neuen Betriebssystems 131 und der neuen kryptographischen Bibliothek 461 sowie ggf. Aktivieren des neuen Urladers 141 und/ oder des neuen symmetrischen Kryptoalgorithmus 481 ist die Betriebssoftware des elektronischen Ausweises 1 vollständig oder in Teilen ausgetauscht.

Fig.1D zeigt die Belegung der Speicheranordnung nach Durchführung aller beschriebenen Ersetzungsvorgänge. Die Kontrolle der Funktion liegt jetzt bei dem neuen Betriebssystem 131, das sich der neuen kryptographischen Bibliothek 461 bedient. Der ursprüngliche symmetrische Kryptoalgorithmus 48 und der ursprüngliche Urlader 14 wurden durch einen neuen symmetrischen Algorithmus 481 bzw. durch einen neuen Urlader 141 ersetzt.

Im Rahmen des grundlegenden Gedankens gestattet die vorbeschriebene Erfindung eine Reihe von weiteren einfachen Abwandlungen, die hier nicht einzeln beschreiben werden. So können die beschriebenen Verfahrensschritte zum Teil in einer abweichenden Reihenfolge ausgeführt werden. Beispielsweise kann der Austausch der kryptographischen Bibliothek 46 unabhängig von Austausch des Betriebssystems 13 erfolgen. Generell können die austauschbaren Komponenten 13,14,46,48 der Betriebssoftware unabhängig voneinander einzeln ausgetauscht werden. Ferner ist es möglich Zwischenschritte einzufügen, insbesondere um die Sicherheit zu erhöhen. Beispielsweise kann vor dem Löschen des alten Betriebssystem eine erneute PIN-Prüfung erfolgen. Sofern eine Betriebssoftware 13 weitere oder andere Komponenten aufweist, können weiterhin auch diese auf die grundsätzlich gleiche Weise ausgetauscht werden, wie vorstehend anhand des Austauschs des Betriebssystems und des Urladers beschrieben.

### Bezugszeichenliste:

- 1: Ressourcenbeschränkter Datenträger (elektronischer Ausweis)
- 2: Terminal (Lesegrät)
- 3: Datenverbindung
- 10: Mikrocontroller (Chip)
- 11: CPU (Tragbarer Datenträger)
- 12: Speicheranordnung
- 13: Betriebssystem
- 14: Urlader
- 15: Speicherblock für personenbezogene und Anwendungsdaten
- 19: Schnittstelle
- 20: CPU (Terminal)
- 29: Schnittstelle
- 42: Freier Speicher
- 44: Ladereserve
- 46: Kryptographische Bibliothek
- 48: Symmetrischer Kryptoalgorithmus
- 50: Speicherblock zur Schlüsselaufnahme
- 501: (neuer) Ladeschlüssel
- 502: Prüfschlüssel
- 52: Startadresse Daten
- 100 -121: Verfahrensschritte
- 131: neues Betriebssystem
- 141: neuer Urlader
- 461: neue kryptographische Bibliothek
- 481: neuer Symmetrischer Kryptoalgorithmus

## Patentansprüche

1. Verfahren zum Austausch der Betriebssoftware eines ressourcenbeschränkten tragbaren Datenträgers (1) an einem Terminal (2),
wobei die Betriebssoftware (13) den Betrieb des Datenträger (1) kontrolliert und mindestens eine von dem Datenträger (1) bereitgestellte Funktion ausführt, und wobei eine Authentisierung des Terminals (2) gegenüber dem Datenträger (1) durchführt wird,
mit den Schritten:
- Bereitstellen einer neuen Betriebssoftware (131) in dem Terminal (2),
- Bereitstellen eines Urladers (14) zum Laden von neuer Betriebssoftware in dem Datenträger (1),
- Bereitstellen eines Terminalzertifikats in dem Terminal (2), das die Berechtigung zur Übertragung eines Ladeschlüssels (501) nachweist,
- Übertragen (104) des Terminalzertifikats im Rahmen der Authentisierung des Terminals (2) an den Datenträger (1)
- Prüfung des Terminalzertifikats durch den Datenträger (1),
- Übertragen eines Ladeschlüssels (501) an den Datenträger (1),
- Übergabe der Betriebskontrolle des Datenträgers (1) an den Urlader (14)
- Löschen der Betriebssoftware (13) des Datenträgers (1) durch den Urlader (14)
- Übertragen der neuen Betriebssoftware (131) unter Verwendung des Ladeschlüssels (501) an den Datenträger (1),
- Aktivieren der neuen Betriebssoftware (131) durch den Urlader (14),
- Übergabe der Kontrolle des Datenträgers von dem Urlader (14) an die neue Betriebssoftware (131).

2. Verfahren nach Anspruch 1, **dadurch gekennzeichnet, dass** in dem Terminal (2) oder bei einem vertrauenswürdigen Hintergrundsystem des Herausgebers des Datenträgers (1) ein Prüfschlüssel (502) gebildet und in das Terminalzertifikat eingefügt wird.

3. Verfahren nach Anspruch 2, **dadurch gekennzeichnet, dass** die Prüfung einer neuen Betriebssoftware (131) mit dem Prüfschlüssel (502) erfolgt.

4. Verfahren nach Anspruch 2, **dadurch gekennzeichnet, dass** der Prüfschlüssel (502) durch Bildung eines Hashs oder eine MACs über den Code einer neuen Betriebssoftware (131) erzeugt wird.

5. Verfahren nach Anspruch 1, **dadurch gekennzeichnet, dass** der Urlader (14) die neue Betriebssoftware (131) in dem Datenträger (1) speichert.

6. Verfahren nach Anspruch 1, **dadurch gekennzeichnet, dass** unter Steuerung der neuen Betriebssoftware (131) ein neuer Urlader (141) in den Datenträger (1) geladen wird.

7. Verfahren nach Anspruch 6, **dadurch gekennzeichnet, dass** nach Laden des neuen Urladers (141) der alte gelöscht und der neue an seine Stelle geschrieben wird.

8. Verfahren nach Anspruch 1, **dadurch gekennzeichnet, dass** unter Steuerung der neuen Betriebssoftware (131) ein neuer Kryptoalgorithmus (481) in den Datenträger (1) geladen wird.

9. Verfahren nach Anspruch 1, **dadurch gekennzeichnet, dass** für das Übertragen der neuen Betriebssoftware (131) eine sichere Ende-zu-Ende-Verbindung zwischen Terminal (2) und Datenträger (1) hergestellt wird.

10. Vorrichtung zum Austausch des Betriebssystems (13) eines ressourcenbeschränkten tragbaren Datenträgers (1), mit
- einer Schnittstelle (19) zum Austausch von Daten mit einem Terminal (19),
- einem Urlader (14) zum Laden von Betriebssoftware,
- einer Einrichtung zum Durchführen einer wechselseitigen Authentisierung zwischen Terminal (2) und Datenträger (1),
- einer Einrichtung zum Empfangen eines Terminalzertifikats von dem Terminal, das die Berechtigung zum Austausch der Betriebssoftware und zur Übertragung eines Ladeschlüssels nachweist,
- einer Einrichtung zum Prüfen des Terminalzertifikats
- einer Einrichtung zum Empfangen eines Ladeschlüssels (501) von dem Terminal (2)
- einer Einrichtung (12) zum Speichern des Ladeschlüssels (501) auf dem Datenträger
- einer Einrichtung zur Übergabe der Betriebskontrolle an den Urlader (14), wobei der Urlader (14) aufweist:
- eine Einrichtung zum Löschen einer vorhandenen Betriebssoftware (13) des Datenträgers,
- eine Einrichtung zum Empfangen einer neuen Betriebssoftware (131) unter Verwendung des Ladeschlüssels (501) von dem Terminal,
und wobei der Urlader (14) dazu eingerichtet ist,
- eine neue Betriebssoftware (131) in dem Datenträger zu prüfen,
- die neue Betriebssoftware (131) zu aktivieren, und
- die Kontrolle des Datenträgers (1) an die neue Betriebssoftware (131) zu übergeben.

## Claims

1. A method for replacing the operating software of a limited-resource portable data
carrier (1) at a terminal (2),
wherein the operating software (13) controls the operation of the data carrier (1) and executes at least one function provided by the data carrier (1), and wherein an authentication of the terminal (2) to the data carrier (1) is carried out,
with the steps:
- providing a new operating software (131) in the terminal (2),
- providing a bootstrap loader (14) for loading new operating software in the data carrier (1),
- providing a terminal certificate in the terminal (2), which proves the authorization for the transmission of a loading key (501),
- transmitting (104) the terminal certificate to the data carrier (1) within the framework of the authentication of the terminal (2),
- verifying the terminal certificate by the data carrier (1),
- transmitting a loading key (501) to the data carrier (1),
- transferring the operation control of the data carrier (1) to the bootstrap loader (14),
- deleting the operating software (13) of the data carrier (1) by the bootstrap loader (14),
- transmitting the new operating software (131) to the data carrier (1) using the loading key (501),
- activating the new operating software (131) by the bootstrap loader (14),
- transferring the control of the data carrier from the bootstrap loader (14) to the new operating software (131).

2. The method according to claim 1, **characterized in that** in the terminal (2) or at a trustworthy background system of the issuer of the data carrier (1) a verification key (502) is formed and inserted into the terminal certificate.

3. The method according to claim 2, **characterized in that** the verification of a new operating software (131) is effected with the verification key (502).

4. The method according to claim 2, **characterized in that** the verification key (502) is generated by forming a hash or a MAC over the code of a new operating software (131).

5. The method according to claim 1, **characterized in that** the bootstrap loader (14) stores the new operating software (131) in the data carrier (1).

6. The method according to claim 1, **characterized in that** under control of the new operating software (131) a new bootstrap loader (141) is loaded into the data carrier (1).

7. The method according to claim 6, **characterized in that** after the loading of the new bootstrap loader (141) the old one is deleted and the new one is written at its place.

8. The method according to claim 1, **characterized in that** under control of the new operating software (131) a new cryptoalgorithm (481) is loaded into the data carrier (1).

9. The method according to claim 1, **characterized in that** for transmitting the new operating software (131) a secure end-to-end connection between terminal (2) and data carrier (1) is established.

10. An apparatus for replacing the operating system (13) of a limited-resource portable data carrier (1), with
- an interface (19) for exchanging data with a terminal (19),
- a bootstrap loader (14) for loading operating software,
- a device for carrying out a mutual authentication between terminal (2) and data carrier (1),
- a device for receiving a terminal certificate from the terminal, which terminal certificate proves the authorization for the replacement of the operating software and for the transmission of a loading key,
- a device for verifying the terminal certificate,
- a device for receiving a loading key (501) from the terminal (2),
- a device (12) for storing the loading key (501) on the data carrier,
- a device for transferring the operation control to the bootstrap loader (14), wherein the bootstrap loader (14) has:
- a device for deleting a present operating software (13) of the data carrier,
- a device for receiving a new operating software (131) using the loading key (501) of the terminal,
and wherein the bootstrap loader (14) is adapted
- to verify a new operating software (131) in the data carrier,
- to activate the new operating software (131), and
- to transfer the control of the data carrier (1) to the new operating software (131).

## Revendications

1. Procédé de remplacement du logiciel d'exploitation d'un support de données (1) portable limité en ressources à un terminal (2),
cependant que le logiciel d'exploitation (13) contrôle le fonctionnement du support de données (1) et exécute au moins une fonction mise à disposition par le support de données (1), et cependant qu'une authentification du terminal (2) envers le support de données (1) est effectuée,
comprenant les étapes:
- mise à disposition d'un nouveau logiciel d'exploitation (131) dans le terminal (2),
- mise à disposition d'un chargeur initial (14) pour le chargement de nouveau logiciel d'exploitation dans le support de données (1),
- mise à disposition d'un certificat de terminal dans le terminal (2), qui prouve l'autorisation à la transmission d'une clé de chargement (501),
- transmission (104) du certificat de terminal dans le cadre de l'authentification du terminal (2) au support de données (1),
- vérification du certificat de terminal par le support de données (1),
- transmission d'une clé de chargement (501) au support de données (1),
- transfert du contrôle du fonctionnement, du support de données (1) au chargeur initial (14),
- effacement du logiciel d'exploitation (13) du support de données (1) par le chargeur initial (14),
- transmission du nouveau logiciel d'exploitation (131) en utilisant la clé de chargement (501) au support de données (1),
- activation du nouveau logiciel d'exploitation (131) par le chargeur initial (14),
- transfert du contrôle du support de données du chargeur initial (14) au nouveau logiciel d'exploitation (131).

2. Procédé selon la revendication 1, **caractérisé en ce que**, dans le terminal (2) ou dans un système d'arrière-plan fiable de l'éditeur du support de données (1), une clé de vérification (502) est constituée et inséréee dans le certificat de terminal.

3. Procédé selon la revendication 2, **caractérisé en ce que** la vérification d'un nouveau logiciel d'exploitation (131) a lieu au moyen de la clé de vérification (502).

4. Procédé selon la revendication 2, **caractérisé en ce que** la clé de vérification (502) est générée par constitution d'un hachage ou d'un MAC par le biais du code d'un nouveau logiciel d'exploitation (131).

5. Procédé selon la revendication 1, **caractérisé en ce que** le chargeur initial (14) mémorise le nouveau logiciel d'exploitation (131) dans le support de données (1).

6. Procédé selon la revendication 1, **caractérisé en ce que**, sous la commande du nouveau logiciel d'exploitation (131), un nouveau chargeur initial (141) est chargé dans le support de données (1).

7. Procédé selon la revendication 6, **caractérisé en ce que**, après chargement du nouveau chargeur initial (141), l'ancien est effacé et le nouveau est écrit à sa place.

8. Procédé selon la revendication 1, **caractérisé en ce que**, sous la commande du nouveau logiciel d'exploitation (131), un nouveau cryptoalgorithme (481) est chargé dans le support de données (1).

9. Procédé selon la revendication 1, **caractérisé en ce que**, pour la transmission du nouveau logiciel d'exploitation (131), une connexion bout à bout sûre entre terminal (2) et support de données (1) est établie.

10. Dispositif de remplacement du logiciel d'exploitation (13) d'un support de données (1) portable limité en ressources, comprenant
- une interface (19) pour l'échange de données avec un terminal (19),
- un chargeur initial (14) pour le chargement de logiciel d'exploitation,
- un équipement de réalisation d'une authentification mutuelle entre terminal (2) et support de données (1),
- un équipement de réception d'un certificat de terminal du terminal, qui prouve l'autorisation au remplacement du logiciel d'exploitation et à la transmission d'une clé de chargement,
- un équipement de vérification du certificat de terminal,
- un équipement de réception d'une clé de chargement (501) du terminal (2),
- un équipement (12) de mémorisation de la clé de chargement (501) sur le support de données,
- un équipement de transfert du contrôle de fonctionnement au chargeur initial (14), cependant que le chargeur initial (14) comporte:
- un équipement d'effacement d'un logiciel d'exploitation (13) existant du support de données,
- un équipement de réception d'un nouveau logiciel d'exploitation (131) en utilisant la clé de chargement (501) du terminal,
et cependant que le chargeur initial (14) est configuré pour
- vérifier un nouveau logiciel d'exploitation (131) dans le support de données,
- activer le nouveau logiciel d'exploitation (131), et
- transférer le contrôle du support de données (1) au nouveau logiciel d'exploitation (131).
